# EUROPÄISCHE PATENTSCHRIFT

(11) **EP 2 199 121 B1**
(45) Veröffentlichungstag und Bekanntmachung des Hinweises auf die Patenterteilung: **18.01.2012**
(21) Anmeldenummer: 09014478.3
(22) Anmeldetag: 20.11.2009
(51) Int. Cl.: B60G 15/06, B60G 17/02, B60G 17/027

(54) **Radaufhängung für Kraftfahrzeuge**
Wheel suspension for motor vehicles
Suspension de roue pour véhicules automobiles

(30) Priorität: 17.12.2008 DE 102008063499
(43) Veröffentlichungstag der Anmeldung: 23.06.2010
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A2- 0 794 100
- EP-A2- 1 577 125
- EP-A2- 1 970 226
- US-A1- 2002 125 676

## Beschreibung

Die Erfindung betrifft eine Radaufhängung für Kraftfahrzeuge gemäß dem Oberbegriff des Patentanspruches 1.

Eine derartige, aktive Radaufhängung beschreibt beispielsweise die DE 10 2007 012 204 A1, bei der eine als Schraubendruckfeder ausgeführte Tragfeder eines Federbeines mit zwei außerhalb der Tragfeder positionierten Speicherfedern kombiniert ist, wobei zur Niveauverstellung ein um den Teleskop-Stoßdämpfer herum angeordneter, elektromotorischer Aktuator mit einem Stelltrieb auf einen axial verschiebbaren Verstellfederteller wirkt, an dem die Tragfeder und die Speicherfedern abgestützt sind. Obwohl hier zur Verringerung des erforderlichen Einbauraumes des Federbeines die Speicherfedern bereits außerhalb der Tragfeder positioniert sind, weicht die Konstruktion des Federbeines wesentlich von herkömmlichen Federbeinen ohne integriertem Aktuator ab, woraus ein erhöhter Teileaufwand resultiert und zum Beispiel ein wahlweiser Einbau pro Fahrzeugtyp mit oder ohne Niveauverstellung nicht unproblematisch ist.

Erlauben es die räumlichen Verhältnisse unmittelbar am Federbein nicht, einen elektromotorischen Aktuator innerhalb des zur Verfügung stehenden Raumes unterzubringen, muss die räumliche Lage des gesamten Federbeines geändert werden, was zu einer schlechteren Feder-/Dämpferübersetzung führt. In der Regel muss die radiale Maßkette erweitert werden, um die Aktuatorik zu verwirklichen.

Aus der EP 1 577 125 A2 ist eine gattungsgemäße Radaufhängung für ein Kraftfahrzeug bekannt. Die Radaufhängung weist ein Federbein mit einem Teleskop-Stoßdämpfer und einer Tragfeder auf. Radial außerhalb der Tragfeder sowie beabstandet vom Federbein ist eine Speicherfeder angeordnet. Die Vorspannkraft der Speicherfeder ist der Tragfeder entgegen gerichtet. Zudem ist die Vorspannkraft der Speicherfeder mittels eines Aktuators veränderbar.

Aufgabe der Erfindung ist es, eine Radaufhängung vorzuschlagen, die bei einem wahlweisen Verbau von Federbeinen mit oder ohne Aktuator den erforderlichen Teileaufwand bei einer zudem fertigungstechnisch günstigen Konstruktion verringert.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Speicherfeder und der Aktuator außerhalb der Tragfeder sowie beabstandet vom Federbein angeordnet sind. Daraus resultiert, dass zwischen einem Federbein ohne Aktuator und einem Federbein zur Niveauverstellung mit Aktuator nur marginale Bauteil-Unterschiede hinsichtlich des Federbeines und des dafür erforderlichen Einbauraumes bestehen. Ferner können der Aktuator und die Speicherfeder an aufbauseitig mit geringem Mehraufwand vorgesehenen Aufnahmen wahlweise beziehungsweise bei Bedarf zusätzlich montiert werden. Durch die eigenständige Konstruktion kann zudem der Aktuator fertigungstechnisch einfacher gestaltet sein. Das Federbein bleibt daher in seiner ursprünglichen maßlichen Konstellation, in der kein zusätzlicher Aktuator verbaut ist, erhalten.

Der Aktuator ist in einem Abstand neben dem Federbein am Aufbau angeordnet und kann über einen elektromotorisch angetriebenen Stelltrieb auf einen Federteller der Speicherfeder wirken. Der Aktuator und die Speicherfeder können je nach den gegebenen Einbauverhältnissen vor oder hinter oder gegebenenfalls sogar seitlich neben dem Federbein positioniert sein.

Des Weiteren ist die stoßdämpferseitige Federaufnahme der Tragfeder über ein Bewegungsübertragungselement, insbesondere ein Gestänge, mit dem zweiten Federteller der Speicherfeder gekoppelt. Daraus resultieren größere konstruktive Freiheitsgrade in der Anordnung sowohl der Speicherfeder als auch des Aktuators. Zudem wird der Verbau eines Aktuators mit einem herkömmlichen Federbein beträchtlich vereinfacht: So kann das herkömmliche Federbein im Wesentlichen geometrisch unverändert beibehalten werden. Es wird lediglich ein separater Steller, der die Speicherfeder sowie den Aktuator aufweist, angebaut. Zusätzlich wird der der Tragfeder zugeordnete verstellbare Federteller durch einen Federteller ersetzt, der in Wirkverbindung mit dem separaten Steller bringbar ist.

Bei einer zum Federbein achsparallelen Anordnung von Speicherfeder und Aktuator kann das Gestänge insbesondere durch eine etwa parallel zum Stoßdämpfer ausgerichtete Koppel und einen aufbauseitig schwenkbar gelagerten, zweiarmigen Hebel gebildet sein, wobei die Koppel mit der Federaufnahme der Tragfeder und dem einen Hebelarm gelenkig verbunden ist und der andere Hebelarm in Umkehrung der Kraftrichtung mit dem zweiten Federteller der Speicherfeder zusammenwirkt.

Zur Erzielung einer symmetrischen Krafteinleitung kann dazu der zweite Federteller der Speicherfeder mit diametral gegenüberliegenden, umfangsseitigen Vorsprüngen ausgeführt sein, die über Lagerbolzen mit dem gabelförmig gestalteten Hebelarm des zweiarmigen Hebels schwenkbar verbunden sind. Bevorzugt kann zudem die Schwenkachse der Lagerbolzen oberhalb der Auflagefläche der Speicherfeder liegen und die Mittelachse der Speicherfeder schneiden.

Schließlich kann in fertigungstechnisch und funktionell günstiger Weise der Aktuator durch einen Elektromotor- und einen Kugelgewindetrieb gebildet sein, wobei der Elektromotor eine drehbar gelagerte und axial justierte Gewindespindel antreibt, die mit einer an dem ersten Federteller befestigten Gewindemutter zusammenwirkt.

Ein Ausführungsbeispiel der Erfindung ist im Folgenden mit weiteren Einzelheiten näher erläutert.

Die schematische Zeichnung zeigt in einer Seitenansicht eine Radaufhängung für ein Kraftfahrzeug mit einem Federbein mit einem Teleskop-Stoßdämpfer und einer Tragfeder, sowie mit einer seitlich neben der Tragfeder angeordneten Speicherfeder, die mit der Tragfeder über ein Gestänge gekoppelt und über einen aufbauseitigen Aktuator verstellbar ist.

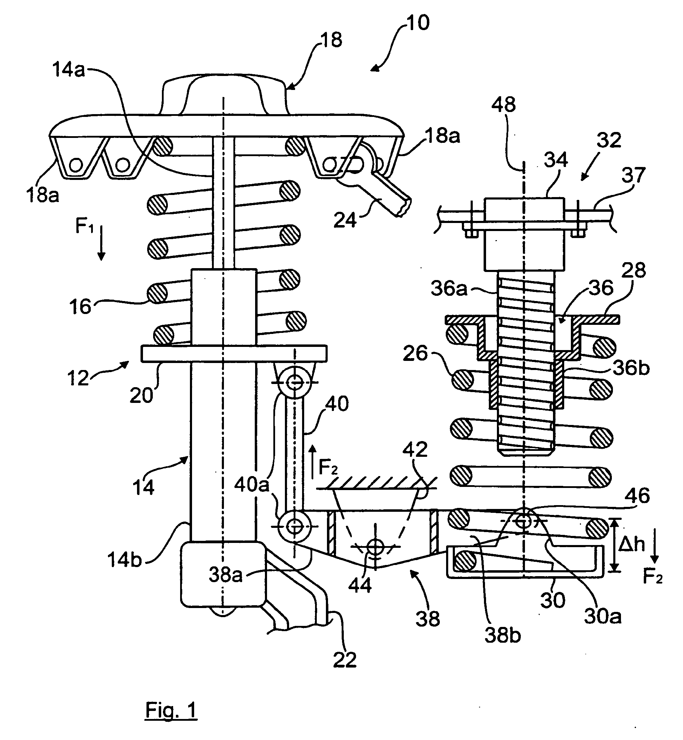

In der Zeichnung ist mit 10 eine Radaufhängung für Kraftfahrzeuge bezeichnet, die nur soweit dargestellt ist, als dies für das Verständnis der vorliegenden Erfindung erforderlich ist.

Die Radaufhängung 10 weist u.a. ein Federbein 12 auf, das sich im Wesentlichen aus einem Teleskop-Stoßdämpfer 14 und einer aus einer Schraubendruckfeder gebildeten Tragfeder 16 zusammensetzt. Die Tragfeder 16 ist wie ersichtlich um den Stoßdämpfer 14 herum positioniert und stützt sich aufbauseitig an einer Lagerplatte 18 und dämpferseitig an einem unteren Federteller 20 ab.

An der Lagerplatte 18 ist ferner unter Zwischenschaltung eines Dämpferlagers (nicht ersichtlich) die Kolbenstange 14a des Stoßdämpfers 14 angelenkt, während das Dämpferrohr 14b über eine nur teilweise dargestellte Stütze 22 mit einem Element der Radaufhängung 10, zum Beispiel einem Radträger oder einem Querlenker, verbunden ist. Die Lagerplatte 18 weist ferner Aufnahmen 18a auf, an die weitere Führungslenker 24 der Radaufhängung 10 angeschlossen sind.

Neben dem Federbein 12 mit der Tragfeder 16 ist eine ebenfalls als Schraubendruckfeder ausgeführte Speicherfeder 26 angeordnet, die zwischen einem ersten, oberen Federteller 28 und einem zweiten, unteren Federteller 30 eingespannt ist.

Der Federteller 28 ist mittels eines Aktuators 32 axial verstellbar. Der Aktuator 32 weist einen Elektromotor 34 und einen Kugelgewindetrieb 36 auf und ist an einer Aufnahmekonsole 37 (nur angedeutet) des Aufbaus des Kraftfahrzeuges befestigt.

Der Elektromotor 34 treibt die drehbar, aber axial unverschiebbar gelagerte Gewindespindel 36a des Stelltriebes 36 an, auf der die Kugelgewindemutter 36b unverdrehbar und unter Zwischenschaltung von Kugeln angeordnet ist. Die Kugelgewindemutter 36b ist fest mit dem oberen Federteller 28 verbunden.

Der untere Federteller 30 der Speicherfeder 26 ist über ein Gestänge aus einem etwa horizontal ausgerichteten, zweiarmigen Hebel 38 und einer etwa vertikal verlaufenden Koppel 40 mit dem unteren Federteller 20 der Tragfeder 16 trieblich verbunden.

Der zweiarmige Hebel 38 ist dazu an einer aufbaufesten Konsole 42 über ein Schwenklager 44 angelenkt. Die Koppel 40 ist über Gelenke 40a mit dem Federteller 20 und dem einen Hebel 38a des zweiarmigen Hebels 38 verbunden.

Der andere Hebel 38b des zweiarmigen Hebels 38 ist gabelförmig ausgeführt, umschließt halbkreisförmig den Federteller 30 der Speicherfeder 26 und ist an diametral gegenüberliegenden, nach oben abragenden Vorsprüngen 30a des Federtellers 30 über Lagerbolzen 46 angelenkt.

Die durch die Lagerbolzen 46 gebildete Schwenkachse liegt dabei, wie ersichtlich ist, oberhalb der Auflagefläche der Speicherfeder 26 am Federteller 30 und schneidet zudem die eingezeichnete Längsmittelachse 48 der Speicherfeder 26. Der Federteller 30 hängt daher am äußeren Ende des Hebels 38b, so dass der untere Federfußpunkt der Speicherfeder 26 um eine Höhendifferenz Δh unterhalb der durch die Lagerbolzen 46 gebildeten Schwenkachse angeordnet ist. Dadurch ist eine kippstabile Abstützung der Speicherfeder 26 auf dem Hebel 38b des zweiarmigen Hebels 38 gewährleistet. Eine Anordnung des Federfußpunktes der Speicherfeder 26 auf gleicher Höhe wie die Schwenkachse der Lagerbolzen würde demgegenüber zu einem kippanfälligen, instabilen System führen.

Durch das beschriebene Gestänge mit dem zweiarmigen Hebel 38 und der Koppel 40 wird die Vorspannkraft F₂ der Speicherfeder 26 umgekehrt und wirkt wie eingezeichnet der Federkraft F₁ der Tragfeder 16 entgegen.

Die Speicherfeder 26 bewirkt in an sich bekannter Weise, dass zur Niveauverstellung der Karosserie (des Aufbaus) des Kraftfahrzeuges über den Aktuator 32 geringere Stellkräfte aufzubringen sind. Zudem stellt der Kugelgewindetrieb 36 eine schnelle und leichtgängigere Verstellbarkeit über den Elektromotor 34 sicher.

## Patentansprüche

1. Radaufhängung für Kraftfahrzeuge, mit einem Federbein (12), das aus einem Teleskop-Stoßdämpfer (14) und einer Tragfeder (16) gebildet ist, wobei der Stoßdämpfer (14) mit Elementen der Radaufhängung (10) und dem Aufbau des Kraftfahrzeuges verbunden ist und die Tragfeder (16) zwischen aufbauseitigen und stoßdämpferseitigen Federaufnahmen (18, 20) eingespannt ist, sowie mit einer Speicherfeder (26), deren Vorspannkraft (F₂) der Tragfeder (16) entgegengerichtet ist und die mittels eines Aktuators (32) zur Verstellung des Fahrzeugniveaus in ihrer Vorspannkraft (F₁) veränderbar ist, wobei die Speicherfeder (26) und der Aktuator (32) außerhalb der Tragfeder (16) sowie beabstandet vom Federbein (12) angeordnet sind, und der Aktuator (32) neben dem Federbein (12) am Aufbau angeordnet ist und über einen Stelltrieb (36) auf einen ersten Federteller (28) der Speicherfeder (26) wirkt, **dadurch gekennzeichnet, dass** die stoßdämpferseitige Federaufnahme (20) der Tragfeder (16) über ein Bewegungsübertragungselement, insbesondere ein Gestänge (38, 40), mit dem zweiten Federteller (30) der Speicherfeder (26) gekoppelt ist.

2. Radaufhängung nach Anspruch 1, **dadurch gekennzeichnet, dass** das Gestänge durch eine etwa parallel zum Stoßdämpfer (14) ausgerichtete Koppel (40) und einen aufbauseitig schwenkbar gelagerten, zweiarmigen Hebel (38) gebildet ist, wobei insbesondere die Koppel (40) mit der Federaufnahme (20) der Tragfeder (16) und dem einen Hebelarm (38a) gelenkig verbunden ist und der andere Hebelarm (38b) mit dem zweiten Federteller (30) zusammenwirkt.

3. Radaufhängung nach Anspruch 2, **dadurch gekennzeichnet, dass** der zweite Federteller (30) der Speicherfeder (26) mit diametral gegenüberliegenden, umfangsseitigen Vorsprüngen (30a) ausgeführt ist, die über Lagerbolzen (46) mit dem gabelförmig gestalteten Hebelarm (38b) des zweiarmigen Hebels (38) schwenkbar verbunden sind.

4. Radaufhängung nach Anspruch 3, **dadurch gekennzeichnet, dass** die Schwenkachse der Lagerbolzen (46) oberhalb der Auflagefläche der Speicherfeder (26) liegt und die Mittelachse (48) der Speicherfeder (26) schneidet.

5. Radaufhängung nach einem der vorhergehenden Ansprüche, **dadurch gekennzeichnet, dass** der Aktuator (32) durch einen Elektromotor (34) und einen Kugelgewindetrieb (36) gebildet ist, wobei der Elektromotor (34) eine drehbar gelagerte und axial justierte Gewindespindel (36a) antreibt, die mit einer an dem ersten Federteller (28) befestigten Gewindemutter (36b) zusammenwirkt.

## Claims

1. Wheel suspension for motor vehicles, having a spring strut (12) which is formed from a telescopic shock-absorbing damper (14) and from a support spring (16), wherein the shock-absorbing damper (14) is connected to elements of the wheel suspension (10) and to the body of the motor vehicle, and the support spring (16) is braced between spring receptacles (18, 20) on the body and on the shock-absorbing damper, and also having an accumulator spring (26), the preload force (F₂) of which opposes the support spring (16) and which can be varied in terms of its preload force (F₁) by means of an actuator (32) in order to adjust the vehicle ride height, wherein the accumulator spring (26) and the actuator (32) are arranged outside the support spring (16) and spaced apart from the spring strut (12), and the actuator (32) is arranged, adjacent to the spring strut (12), on the body and acts via an actuating drive (36) on a first spring plate (28) of the accumulator spring (26), **characterized in that that** spring receptacle (20) of the support spring (16) which is on the shock-absorbing damper is coupled via a movement-transmitting element, in particular a linkage (38, 40), to the second spring plate (30) of the accumulator spring (26).

2. Wheel suspension according to Claim 1, **characterized in that** the linkage is formed by a coupler (40) aligned approximately parallel to the shock-absorbing damper (14) and by a two-armed lever (38) which is pivotably mounted on the body, wherein in particular the coupler (40) is articulatedly connected to the spring receptacle (20) of the support spring (16) and to one lever arm (38a), and the other lever arm (38b) interacts with the second spring plate (30).

3. Wheel suspension according to Claim 2, **characterized in that** the second spring plate (30) of the accumulator spring (26) is formed with diametrically opposed circumferential projections (30a) which are pivotably connected via bearing pins (46) to the fork-shaped lever arm (38b) of the two-armed lever (38).

4. Wheel suspension according to Claim 3, **characterized in that** the pivot axis of the bearing pin (46) lies above the contact surface of the accumulator spring (26) and intersects the central axis (48) of the accumulator spring (26).

5. Wheel suspension according to one of the preceding claims, **characterized in that** the actuator (32) is formed by an electric motor (34) and a ball screw (36), wherein the electric motor (34) drives a rotatably mounted and axially aligned threaded spindle (36a) which interacts with a threaded nut (36b) fastened to the first spring plate (28).

## Revendications

1. Suspension de roue pour véhicules automobiles, comprenant une jambe de suspension (12) qui est constituée d'un amortisseur télescopique (14) et d'un ressort de support (16), l'amortisseur (14) étant raccordé à des éléments de la suspension de roue (10) et à la caisse du véhicule automobile, et le ressort de support (16) étant serré entre des logements de ressort (18, 20) du côté de la caisse et du côté de l'amortisseur, et comprenant un ressort accumulateur (26), dont la force de précontrainte (F₂) est opposée au ressort de support (16) et qui peut être modifiée au moyen d'un actionneur (32) pour régler le niveau de la force de précontrainte (Fᵢ) du véhicule, le ressort accumulateur (26) et l'actionneur (32) étant disposés en dehors du ressort de support (16) et à distance de la jambe de suspension (12), et l'actionneur (32) étant disposé à côté de la jambe de suspension (12) sur la caisse et agissant par le biais d'un mécanisme de réglage (36) sur une première coupelle de ressort (28) du ressort accumulateur (26), **caractérisée en ce que** le logement de ressort (20) du ressort de support (16), du côté de l'amortisseur, est accouplé à la deuxième coupelle de ressort (30) du ressort accumulateur (26) par le biais d'un élément de transfert de mouvement, notamment par le biais d'une tringlerie (38, 40).

2. Suspension de roue selon la revendication 1, **caractérisée en ce que** la tringlerie est formée par une bielle (40) orientée approximativement parallèlement à l'amortisseur (14), et par un levier (38) à deux bras monté de manière pivotante du côté de la caisse, la bielle (40) étant notamment connectée de manière articulée au logement de ressort (20) du ressort de support (16) et à l'un des bras de levier (38a), et l'autre bras de levier (38b) coopérant avec la deuxième coupelle de ressort (30).

3. Suspension de roue selon la revendication 2, **caractérisée en ce que** la deuxième coupelle de ressort (30) du ressort accumulateur (26) est réalisée avec des saillies (30a) du côté de la périphérie, diamétralement opposées, qui sont connectées de manière pivotante au bras de levier (38b) réalisé en forme de fourche du levier à deux bras (38) par le biais de boulons de palier (46).

4. Suspension de roue selon la revendication 3, **caractérisée en ce que** l'axe de pivotement des boulons de palier (46) se situe au-dessus de la surface d'appui du ressort accumulateur (26) et coupe l'axe médian (48) du ressort accumulateur (26).

5. Suspension de roue selon l'une quelconque des revendications précédentes, **caractérisée en ce que** l'actionneur (32) est formé par un moteur électrique (34) et une vis d'entraînement à billes (36), le moteur électrique (34) entraînant une broche filetée (36a) montée à rotation et ajustée axialement, qui coopère avec un écrou fileté (36b) fixé sur la première coupelle de ressort (28).
